# EUROPÄISCHE PATENTSCHRIFT

(11) **EP 3 715 677 B1**
(45) Veröffentlichungstag und Bekanntmachung des Hinweises auf die Patenterteilung: **08.09.2021**
(21) Anmeldenummer: 20160865.0
(22) Anmeldetag: 04.03.2020
(51) Int. Cl.: F16H 61/4157, B60T 1/06, B60T 1/093, B60T 7/04, B60T 7/10

(54) **FLURFÖRDERZEUG MIT EINEM HYDROSTATISCHEN FAHRANTRIEB**
INDUSTRIAL TRUCK WITH A HYDROSTATIC TRACTION DRIVE
CHARIOT DE MANUTENTION DOTÉ D'UN ENTRAÎNEMENT HYDROSTATIQUE

(30) Priorität: 25.03.2019 DE 102019107564
(43) Veröffentlichungstag der Anmeldung: 30.09.2020
(73) Patentinhaber: Linde Material Handling GmbH, 63743 Aschaffenburg (DE)
(72) Erfinder: HANKE, Mark, 63739 Aschaffenburg (DE); HANKE, Björn, 64385 Reichelsheim (DE)
(74) Vertreter: Patentship Patentanwaltsgesellschaft mbH

(56) Entgegenhaltungen:
- DE-A1- 1 455 555
- DE-A1-102009 031 743
- JP-A- 2002 181 191
- US-A- 3 542 173

## Beschreibung

Die Erfindung betrifft ein Flurförderzeug mit einem hydrostatischen Fahrantrieb, der mittels einer Fahrpedaleinrichtung steuerbar ist, wobei durch Beaufschlagen, insbesondere einer Zurücknahme, der Fahrpedaleinrichtung in Richtung einer Neutralstellung eine hydrostatische Abbremsung des Flurförderzeugs durch den hydrostatischen Fahrantrieb erfolgt, und mit einer Hilfsbremsanlage, die mittels einer Bremspedaleinrichtung steuerbar ist, wobei durch Betätigen der Bremspedaleinrichtung die hydrostatische Verzögerung des Flurförderzeugs durch den hydrostatischen Fahrantrieb verstellbar ist und die Hilfsbremsanlage in eine Bremsstellung betätigbar ist, wobei die Bremspedaleinrichtung einen ersten Betätigungsbereich aufweist, in dem die hydrostatische Verzögerung durch den hydrostatischen Fahrantrieb verstellbar ist und die Hilfsbremsanlage nicht betätigt ist, und einen sich an den ersten Betätigungsbereich anschließenden zweiten Betätigungsbereich aufweist, in dem die Hilfsbremsanlage in Richtung einer Bremsstellung betätigbar ist, wobei die Bremspedaleinrichtung ein Bremspedal aufweist, das um eine Schwenkachse schwenkbar angeordnet ist, und einen Betätigungshebel aufweist, der um eine weitere Schwenkachse schwenkbar angeordnet ist und die Hilfsbremsanlage betätigt, wobei das Bremspedal in dem ersten Betätigungsbereich den Betätigungshebel nicht betätigt und das Bremspedal in dem zweiten Betätigungsbereich den Betätigungshebel betätigt.

Ein gattungsgemäßes Flurförderzeug ist aus der US 3 542 173 A bekannt.

Flurförderzeuge mit einem hydrostatischen Fahrabtrieb, insbesondere einem hydrostatischen Fahrantrieb, bei dem eine hydraulische Pumpe mit mindestens einem hydraulischen Motor im geschlossen Kreislauf verbunden ist, nutzen den hydrostatischen Fahrantrieb als Betriebsbremse, indem mit dem hydrostatischen Fahrantrieb eine hydrostatische Abbremsung des Flurförderzeugs durchgeführt wird. Der hydrostatische Fahrantrieb ist hierbei in der Regel mittels einer Fahrpedaleinrichtung, beispielsweise einer Doppelpedalanordnung, steuerbar, mit der die Fahrtrichtung und die Fahrtgeschwindigkeit des Flurförderzeugs vorgebbar und einstellbar ist. Durch Zurücknahme der Fahrpedaleinrichtung in eine Neutralstellung für den Stillstand des Flurförderzeugs wird das Flurförderzeug mittels des hydrostatischen Fahrantriebs hydrostatisch abgebremst und verzögert.

Zusätzlich sind gattungsgemäße Flurförderzeug mit einer Hilfsbremsanlage versehen, die mittels einer Bremspedaleinrichtung steuerbar ist. Die Hilfsbremsanlage weist hierbei die Funktion einer Feststellbremse auf, mit der das Flurförderzug im Stillstand gehalten werden kann.

Eine schnelle Zurücknahme der Fahrpedaleinrichtung bei einer hohen Fahrgeschwindigkeit des Flurförderzeugs führt hierbei zu einer starken Verzögerung des Flurförderzeugs, um die gesetzlichen Vorschriften bezüglich der Abbremsung des Flurförderzeugs erfüllen zu können. Ein zu schnelles Zurücknehmen der Fahrpedaleinrichtung mit einer damit verbundenen zu hohen Verzögerung des Flurförderzeugs kann beispielsweise bei einer ungeübten Bedienperson auftreten oder wenn die Bedienperson mit dem Fuß von der Fahrpedaleinrichtung ungewollt abrutscht. Die beim Zurücknehmen der Fahrpedaleinrichtung mittels des hydrostatischen Fahrantrieb eingestellte und vorgegebene Verzögerung des Flurförderzeugs wird bei gewissen Einsatzfällen von Flurförderzeugen von den Bedienpersonen als zu hoch empfunden. Eine reduzierte und verringerte hydrostatische Bremsverzögerung durch den hydrostatischen Fahrantrieb beim Zurücknehmen der Fahrpedaleinrichtung wäre möglich, wenn zusätzlich zu der von dem hydrostatischen Fahrantrieb gebildeten Betriebsbremse eine zweite redundante Betriebsbremse vorgesehen wird, beispielsweise eine mechanische Betriebsbremse. Eine derartige Kombinationsbremsanlage, die zwei redundante Betriebsbremsen aufweist, führt jedoch zu einem hohen Bauaufwand des Flurförderzeugs.

Der vorliegenden Erfindung liegt die Aufgabe zugrunde, ein Flurförderzeug der eingangs genannten Gattung zur Verfügung zu stellen, bei dem das hydrostatische Abbremsen durch den hydrostatischen Fahrantrieb auf einfache Weise anpassbar ist.

Diese Aufgabe wird erfindungsgemäß dadurch gelöst, dass eine Sensoreinrichtung vorgesehen ist, die die Schwenkbewegung des Bremspedals um die Schwenkachse erfasst und die mit einer den hydrostatischen Fahrantrieb steuernden elektronischen Steuereinrichtung in Verbindung steht, wobei die den hydrostatischen Fahrantrieb steuernde elektronische Steuereinrichtung derart ausgebildet ist, dass bei einer Betätigung der den hydrostatischen Fahrantrieb steuernden Fahrpedaleinrichtung in Richtung einer Neutralstellung der hydroststatische Fahrantrieb derart angesteuert wird, dass das Flurförderzeug gemäß einer Minimalverzögerung abbremst, und bei einer Betätigung des Bremspedals im ersten Betätigungsbereich die Verzögerung des Flurförderzeugs durch den hydrostatischen Fahrantrieb ausgehend von der Minimalverzögerung in Abhängigkeit des Signals der Sensoreinrichtung erhöht wird.

Die Erfindung geht hierbei von dem Gedanken aus, dass die hydrostatische Verzögerung des Flurförderzeugs durch den hydrostatischen Fahrantrieb bei der Zurücknahme der Fahrpedaleinrichtung verringert werden kann, wenn eine Verstärkung der von dem hydrostatischen Fahrantrieb erzeugten hydrostatischen Abbremsung durch ein weiteres Bedienelement geschaffen wird, im vorliegenden Fall der Bremspedaleinrichtung, die die Hilfsbremsanlage steuert. Mit der Erfindung kann die hydrostatische Bremsverzögerung durch den hydrostatischen Fahrantrieb bei einer Zurücknahme der Fahrpedaleinrichtung steuerungstechnisch bis auf einen unteren Grenzwert reduziert werden, um ein sanftes Abbremsen des Flurförderzeugs durch die hydrostatische Abbremsung bei einer Zurücknahme der Fahrpedaleinrichtung in die Neutralstellung zu erzielen. Durch eine Betätigung der Bremspedaleinrichtung in dem ersten Betätigungsbereich kann auf einfache Weise die hydrostatische Abbremsung durch den hydrostatischen Fahrantrieb erhöht und somit verstärkt werden und somit die hydrostatische Verzögerung des Flurförderzeugs durch den hydrostatischen Fahrantrieb angehoben werden, um die gesetzlichen Vorschriften bezüglich Bremsverzögerung und Bremsweg einzuhalten. Bei der Erfindung handelt es sich nicht um eine aufwändige Kombinationsbremsanlage, da die geforderte Bremsverzögerung des Flurförderzeugs ausschließlich über den die Betriebsbremse bildenden hydrostatischen Fahrantrieb aufgebracht wird.

Gemäß der Erfindung weist die Bremspedaleinrichtung ein Bremspedal auf, das um eine Schwenkachse schwenkbar angeordnet ist, wobei eine Sensoreinrichtung vorgesehen ist, die die Schwenkbewegung des Bremspedals um die Schwenkachse erfasst und die mit einer den hydrostatischen Fahrantrieb steuernden elektronischen Steuereinrichtung in Verbindung steht, und einen Betätigungshebel auf, der um eine weitere Schwenkachse schwenkbar angeordnet ist und die Hilfsbremsanlage betätigt, wobei das Bremspedal in dem ersten Betätigungsbereich den Betätigungshebel nicht betätigt und das Bremspedal in dem zweiten Betätigungsbereich den Betätigungshebel betätigt. Die Bremspedaleinrichtung besteht somit aus dem Bremspedal und dem mittels des Bremspedals betätigbaren Betätigungshebel, der die Hilfsbremsanlage steuert. In dem ersten Betätigungsbereich des Bremspedals wird nur das Bremspedal betätigt und mit der Sensoreinrichtung in Verbindung mit der elektronischen Steuereinrichtung kann die hydrostatische Verzögerung des Flurförderzeugs mittels des hydrostatischen Fahrantriebs verstellt und erhöht werden. In dem zweiten Betätigungsbereich des Bremspedals wird dann der Betätigungshebel betätigt und damit die Hilfsbremsanlage aktiviert. Bei der Bremspedaleinrichtung ist somit der Betätigungsweg des Bremspedals mittels des eine Zusatzmechanik bildenden Betätigungshebels in zwei Betätigungsbereiche aufgeteilt, wobei in dem ersten Betätigungsbereich nur das Bremspedal betätigt wird, um in Verbindung mit der Sensoreinrichtung die hydrostatische Verzögerung des Flurförderzeugs mittels des hydrostatischen Fahrantriebs verstellen zu können, und in dem an den ersten Betätigungsbereich anschließenden zweiten Betätigungsbereich von dem Bremspedal auch der Betätigungshebel betätigt wird, um die Hilfsbremsanlage zu betätigen.

Bei der Erfindung ist die den hydrostatischen Fahrantrieb steuernde elektronische Steuereinrichtung derart ausgebildet, dass bei einer Betätigung der den hydrostatischen Fahrantrieb steuernden Fahrpedaleinrichtung in Richtung einer Neutralstellung der hydroststatische Fahrantrieb derart angesteuert wird, dass das Flurförderzeug gemäß einer Minimalverzögerung abbremst, und bei einer Betätigung des Bremspedals im ersten Betätigungsbereich die Verzögerung des Flurförderzeugs durch den hydrostatischen Fahrantrieb ausgehend von der Minimalverzögerung in Abhängigkeit des Signals der Sensoreinrichtung erhöht wird. Bei der Betätigung der den hydrostatischen Fahrantrieb steuernden Fahrpedaleinrichtung in Richtung einer Neutralstellung erfolgt somit die hydrostatische Verzögerung des Flurförderzeugs mittels des hydrostatischen Fahrantriebs gemäß einer Minimalverzögerung, so dass ein sanftes Abbremsverhalten des Flurförderzeugs bei der Zurücknahme der Fahrpedaleinrichtung erzielt wird. Durch eine Betätigung des Bremspedals kann die hydrostatische Verzögerung durch den hydrostatischen Fahrantrieb durch Auswertung des Signals der Sensoreinrichtung auf einfache Weise erhöht und damit die hydrostatische Verzögerung durch den hydrostatischen Fahrantrieb verstärkt werden. Um zu erzielen, dass das Bremspedal in dem ersten Betätigungsbereich den die Hilfsbremsanlage steuernden Betätigungshebel nicht betätigt, weist gemäß einer bevorzugten Ausgestaltungsform der Erfindung das Bremspedal in dem ersten Betätigungsbereich keinen mechanischen Kontakt zu dem in einer Neutralstellung befindlichen Betätigungshebel auf und gelangt das Bremspedal am Ende des ersten Betätigungsbereichs mit dem in der Neutralstellung befindlichem Betätigungshebel in mechanischen Kontakt. Hierdurch wird auf einfache Weise erzielt, dass von dem Bremspedal nur in dem zweiten Betätigungsbereich der Betätigungshebel betätigt wird, um die Hilfsbremsanlage zu betätigen.

Das Bremspedal ist bevorzugt mittels einer Federeinrichtung in eine Neutralstellung beaufschlagt. Dadurch kann auf einfache Weise das Bremspedal im nicht betätigten Zustand in die Neutralstellung betätigt werden.

Besondere Vorteile ergeben sich, wenn gemäß einer Weiterbildung der Erfindung der Betätigungshebel mittels einer Federeinrichtung in eine Neutralstellung beaufschlagt ist. Mit einer den Betätigungshebel in die Neutralstellung betätigenden Federeinrichtung kann auf einfache Weise ein Druckpunkt erzielt werden, wenn das Bremspedal am Ende des ersten Betätigungsbereichs mit dem in der Neutralstellung befindlichem Betätigungshebel in mechanischen Kontakt gelangt. Mit dem Druckpunkt kann der das Bremspedal betätigenden Bedienperson somit auf einfache Weise der Übergang von dem ersten Betätigungsbereich in den zweiten Betätigungsbereich des Bremspedals spürbar gemacht werden.

Vorteilhafterweise ist zwischen dem Bremspedal und dem Betätigungshebel eine Federeinrichtung angeordnet. Mit einer derartigen zwischen dem Bremspedal und dem Betätigungshebel angeordneten Federeinrichtung, die nur in dem ersten Betätigungsbereich des Bremspedal betätigt wird, kann auf einfache Weise der das Bremspedal betätigenden Bedienperson in dem ersten Betätigungsbereich eine Kraftrückmeldung an dem Bremspedal gegeben werden.

Gemäß einer Weiterbildung der Erfindung ist an dem Bremspedal ein Betätigungselement angeordnet, mittels dem in dem zweiten Betätigungsbereich der Betätigungshebel betätigbar ist. Mit einem Betätigungselement kann auf einfache Weise in dem zweiten Betätigungsbereich von dem Bremspedal der Betätigungshebel betätigt werden.

Das Betätigungselement ist gemäß einer vorteilhaften Ausgestaltungsform der Erfindung als an dem Bremspedal drehbar angeordnete Rolle ausgebildet. Mit einer drehbar an dem Bremspedal angeordneten Rolle kann die Reibung zwischen Bremspedal und Betätigungshebel bei dessen Betätigung durch das Bremspedal gering gehalten werden und dadurch eine feinfühlige Betätigung des Betätigungshebels durch das Bremspedal erzielt werden.

Die elektronische Steuereinrichtung ist hierbei bevorzugt derart ausgebildet, dass mit zunehmender Betätigung des Bremspedals im ersten Betätigungsbereich die Verzögerung des Flurförderzeugs durch den hydrostatischen Fahrantrieb erhöht wird. Dadurch ist eine intuitive des Flurförderzeugs möglich, da in dem ersten Betätigungsbereich des Bremspedals mit zunehmender Betätigung des Bremspedals die hydrostatische Verzögerung durch den hydrostatischen Fahrantrieb von der Minimalverzögerung bis zu einer Maximalverzögerung erhöht wird.

Besondere Vorteile ergeben sich, wenn die Minimalverzögerung einstellbar ist. Sofern die Minimalverzögerung, gemäß der das Flurförderzeug mit dem hydrostatischen Fahrantrieb bei der Zurücknahme der Fahrpedaleinrichtung in die Neutralstellung abgebremst wird, einstellbar ist, kann das Abbremsverhalten des Flurförderzeugs auf einfache Weise an verschiedene Einsatzfälle des Flurförderzeugs und/oder an Wünsche der Bedienperson angepasst werden.

Der Betätigungshebel kann die Hilfsbremsanlage mechanisch oder hydraulisch oder pneumatisch oder elektrisch betätigen. Eine mechanische Betätigung der Hilfsbremsanlage kann beispielsweise durch einen Seilzug, ein Gestänge oder eine Kurvenscheibe umgesetzt werden. Eine hydraulische Betätigung der Hilfsbremsanlage kann beispielsweise durch einen von dem Betätigungshebel betätigten Geberzylinder umgesetzt werden. Eine pneumatische Betätigung der Hilfsbremsanlage kann beispielsweise durch einen von dem Betätigungshebel betätigten Bremskraftverstärker umgesetzt werden. Eine elektrische Betätigung der Hilfsbremsanlage kann beispielsweise durch ein Magnetventil oder eine elektromagnetische Bremseinrichtung umgesetzt werden.

Weitere Vorteile und Einzelheiten der Erfindung werden anhand des in den schematischen Figuren dargestellten Ausführungsbeispiels näher erläutert. Hierbei zeigt
- Figur 1: eine erfindungsgemäße Bremspedaleinrichtung eines Flurförderzeugs in einer Neutralstellung,
- Figur 2: die Bremspedaleinrichtung der Figur 1 am Ende des ersten Betätigungsbereichs und
- Figur 3: die Bremspedaleinrichtung der Figuren 1 und 2 im zweiten Betätigungsbereich.

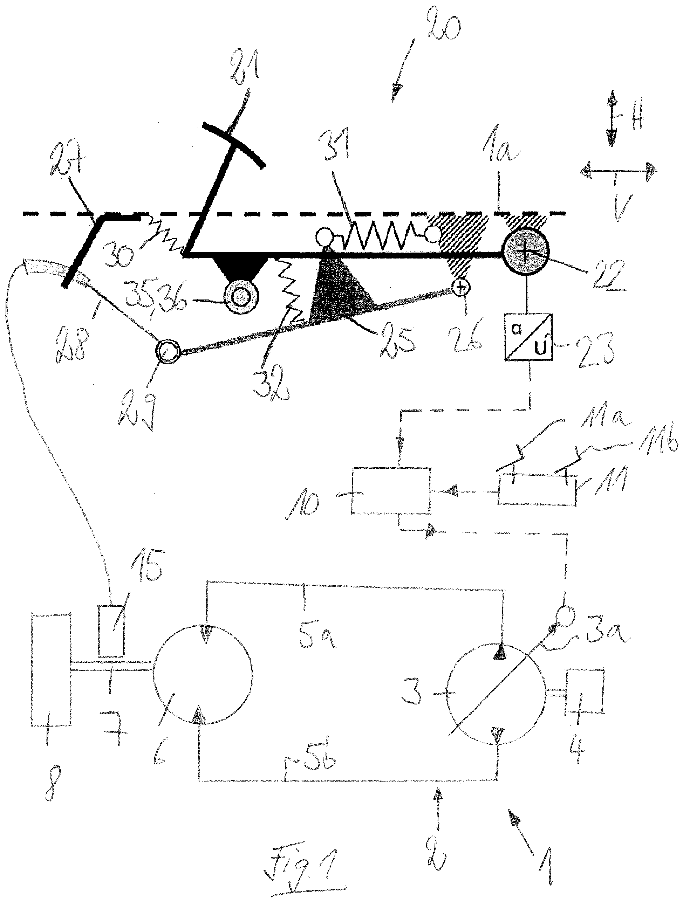

In der Figur 1 ist ein Flurförderzeug 1 mit einem hydrostatischen Fahrantrieb 2 in einer Prinzipdarstellung dargestellt.

Der hydrostatische Fahrantrieb 2 weist eine im Fördervolumen verstellbare Verstellpumpe 3 auf, die von einem Antriebsmotor 4, beispielsweise einem Verbrennungsmotor, angetrieben ist. Mittels Druckmittelleitungen 5a, 5b ist die Verstellpumpe 3 im geschlossenen Kreislauf an einen oder mehrere hydraulische Motoren 6 angeschlossen, die über eine Abtriebswelle 7 mit einem Antriebsrad 8 des Flurförderzeugs in trieblicher Verbindung stehen.

Die Verstellpumpe 3 weist zur Veränderung des Fördervolumens eine Fördervolumenstelleinrichtung 3a auf, beispielsweise eine in der Neigung verstellbare Schrägscheibe einer als Schrägscheibenmaschine ausgebildeten Verstellpumpe 3. Die Fördervolumenstelleinrichtung 3a ist elektrisch angesteuert und steht zur Ansteuerung mit einer elektronischen Steuereinrichtung 10 in Verbindung. Die elektronische Steuereinrichtung 10 steht eingangsseitig mit einer Fahrpedaleinrichtung 11 in Verbindung, mit der der hydrostatische Fahrantrieb 2 steuerbar ist. Die Fahrpedaleinrichtung 11 ist im dargestellten Ausführungsbeispiel als Doppelpedalsteuerung mit zwei Fahrpedalen 11a, 11b ausgeführt. Mit dem Fahrpedal 11a kann die Vorwärtsfahrt des Flurförderzeugs 1 und mit dem Fahrpedal 11b die Rückwärtsfahrt des Flurförderzeugs 1 gesteuert werden. Bei einer Betätigung des Fahrpedals 11a bzw. 11b durch die Bedienperson wird hierbei ein Geschwindigkeitssollwert für die Vorwärtsfahrt bzw. Rückwärtsfahrt vorgegeben und von der elektronischen Steuereinrichtung 10 die Fördervolumenstelleinrichtung 3a der Verstellpumpe 3 entsprechend angesteuert und die Verstellpumpe 3 ausgeschwenkt, um den an dem Fahrpedal 11a, 11b vorgegebenen Geschwindigkeitssollwert zu erzielen.

Der hydrostatische Fahrantrieb 2 bildet weiterhin eine Betriebsbremse des Flurförderzeugs 1. Durch eine Beaufschlagung und somit eine Verstellung der Fahrpedaleinrichtung 11 in Richtung einer Neutralstellung für den Stillstand des Flurförderzeugs 1 wird hierbei von der elektronischen Steuereinrichtung 10 die Fördervolumenstelleinrichtung 3a der Verstellpumpe 3 in eine Nullstellung verstellt und zurückgeschwenkt, so dass eine hydrostatische Abbremsung des Flurförderzeugs 1 durch den hydrostatischen Fahrantrieb 2 erfolgt.

Das Flurförderzeug 1 weist weiterhin eine Hilfsbremsanlage 15 auf, die mittels einer Bremspedaleinrichtung 20 steuerbar ist. Die Hilfsbremsanlage 15 bildet eine Feststellbremse des Flurförderzeugs 1. Die Hilfsbremsanlage 15 kann hierzu auf die Abtriebswelle 7 einwirken und als mechanische Bremseinrichtung, beispielsweise Lamellenbremse, ausgebildet sein.

Die Bremspedaleinrichtung 20 weist ein Bremspedal 21 aufweist, das um eine Schwenkachse 22 schwenkbar am Flurförderzeug 1, beispielsweise einer Bodenplatte 1a eines Fahrerplatzes, angeordnet ist. Die Bremspedaleinrichtung 20 ist mit einer Sensoreinrichtung 23 versehen, mit der die Schwenkbewegung des Bremspedals 21 um die Schwenkachse 22 erfasst wird. Die Sensoreinrichtung 23 ist beispielswiese als Drehgeber ausgebildet. Die Sensoreinrichtung 23 steht mit der den hydrostatischen Fahrantrieb 2 steuernden elektronischen Steuereinrichtung 10 in Verbindung.

Die Bremspedaleinrichtung 20 weist weiterhin einen Betätigungshebel 25 auf, der um eine weitere Schwenkachse 26 schwenkbar am Flurförderzeug 1, beispielsweise einer Bodenplatte 1a eines Fahrerplatzes, angeordnet ist. Mit dem Betätigungshebel 25 ist die Hilfsbremsanlage 15 betätigbar. Im dargestellten Ausführungsbeispiel ist eine mechanische Betätigung der Hilfsbremsanlage 15 vorgesehen, wobei an einem Halter 27 ein Seilzug 28, beispielsweise ein Bowdenzug, befestigt ist, der mit dem Betätigungshebel 25 an einem Koppelpunkt 29 verbunden ist.

Die Schwenkachse 22 des Bremspedals 21 ist hierbei von der Schwenkachse 26 des Betätigungshebels 25 in vertikaler Richtung V und in horizontaler Richtung H beabstandet angeordnet.

In der Figur 1 befinden sich das Bremspedal 21 in seiner unbetätigten Neutralstellung und der Betätigungshebel 25 in seiner unbetätigten Neutralstellung.

Das Bremspedal 21 ist mittels einer Federeinrichtung 30 in seine Neutralstellung beaufschlagt. Die Federeinrichtung 30 ist mit einem ersten Ende mit dem Bremspedal 21 verbunden und an einem zweiten Ende mit dem Flurförderzeug 1, beispielsweise der Bodenplatte 1a, verbunden. Die Federeinrichtung 30 bildet eine Rückstellfeder des Bremspedals 21, die das Bremspedal 21 im unbetätigten Zustand in die Neutralstellung beaufschlagt.

Der Betätigungshebel 25 ist mittels einer Federeinrichtung 31 in seine Neutralstellung beaufschlagt. Die Federeinrichtung 31 ist mit einem ersten Ende mit dem Betätigungshebel 25 verbunden und an einem zweiten Ende mit dem Flurförderzeug 1, beispielsweise der Bodenplatte 1a, verbunden.

Zwischen dem Bremspedal 21 und dem Betätigungshebel 25 ist eine Federeinrichtung 32 angeordnet.

An dem Bremspedal 21 ist ein Betätigungselement 35 angeordnet, mittels dem der Betätigungshebel 25 betätigbar. Das Betätigungselement 35 ist im dargestellten Ausführungsbeispiel als an dem Bremspedal 21 drehbar angeordnete Rolle 36 ausgebildet.

In der in der Figur 1 dargestellten Ausgangsstellung (Neutralstellung) der Bremspedaleinrichtung 20 hat der in der Neutralstellung befindliche Bremshebel 21 keinen mechanischen Kontakt mit dem in der Neutralstellung befindlichen Betätigungshebel 25. In der in der Figur 1 dargestellten Neutralstellung ist das Bremspedal 21 mit dem Betätigungselement 35 von dem Betätigungshebel 25 in vertikaler Richtung V beabstandet.

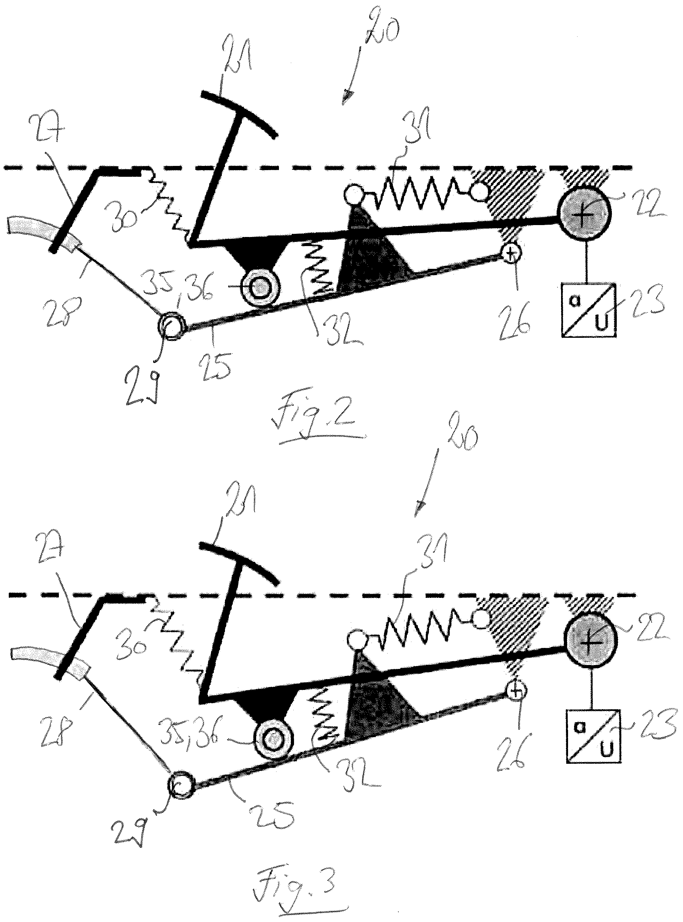

Bei einer Betätigung des Bremspedals 21 wird somit ein erster Betätigungsbereich erzielt, in dem nur das Bremspedal 21 um die Schwenkachse 22 im Gegenuhrzeigersinn verschwenkt wird, der Betätigungshebel 25 jedoch nicht betätigt wird und in seiner Neutralstellung verbleibt. In der Figur 2 ist das Ende des ersten Betätigungsbereichs dargestellt, wobei das um die Schwenkachse 22 im Gegenuhrzeigersinn verschwenkte Bremspedals 21 mit dem Betätigungselement 35 mit dem in seiner Neutralstellung befindlichen Betätigungshebel 25 in Kontakt gelangt.

In dem ersten Betätigungsbereich wird hierbei die Federeinrichtung 32 betätigt, so dass mit der Federeinrichtung 32 eine Kraftrückmeldung an dem Bremspedal 21 im ersten Betätigungsbereich für die Bedienperson erzielt wird.

Am Ende des ersten Betätigungsbereichs wird weiterhin mittels der Federeinrichtung 31, die den Betätigungshebel 25 in die Neutralstellung betätigt, ein Druckpunkt erzeugt, der überwunden werden muss, wenn das Bremspedal 21 weiter betätigt wird.

Sofern das Bremspedal 21 ausgehend von der Stellung der Figur 2 weiter betätigt wird und weiter um die Schwenkachse 22 im Gegenuhrzeigersinn verschwenkt wird, gelangt das Bremspedal 21 in einen an den ersten Schwenkbereich angrenzenden zweiten Schwenkbereich, der in der Figur 3 dargestellt ist und in dem über das Betätigungselement 35 ebenfalls der Betätigungshebel 25 betätigt und um seine Schwenkachse 26 im Gegenuhrzeigersinn verschwenkt wird. Durch das Verschwenken des Betätigungshebel 25 um seine Schwenkachse 26 im Gegenuhrzeigersinn wird der Seilzug 28 betätigt und dadurch über die Betätigung des Bremspedals 21 die Hilfsbremsanlage 15 in Richtung einer Bremsstellung betätigt.

In dem ersten Schwenkbereich des Bremspedals 21 wird mittels der Sensoreinrichtung 23 das Verschwenken des Bremspedals 21 um die Schwenkachse 22 von der elektronischen Steuereinrichtung 10 erfasst.

Die den hydrostatischen Fahrantrieb 2 steuernde elektronische Steuereinrichtung 10 ist hierbei derart ausgebildet, dass bei einer Betätigung der den hydrostatischen Fahrantrieb 2 steuernden Fahrpedaleinrichtung 11 in Richtung einer Neutralstellung der hydroststatischen Fahrantrieb 2 derart angesteuert wird, dass das Flurförderzeug gemäß einer Minimalverzögerung abbremst. Bei einer Betätigung des Bremspedals 21 im ersten Betätigungsbereich wird von der elektronischen Steuereinrichtung 10 das Signal der Sensoreinrichtung 23 ausgewertet und die Verzögerung des Flurförderzeugs 1 durch den hydrostatischen Fahrantrieb 2 ausgehend von der Minimalverzögerung in Abhängigkeit des Signals der Sensoreinrichtung 23 erhöht. Die elektronische Steuereinrichtung 10 ist hierzu derart ausgebildet, dass mit zunehmender Betätigung des Bremspedals 21 im ersten Betätigungsbereich die hydrostatische Verzögerung des Flurförderzeugs durch den hydrostatischen Fahrantrieb 2 erhöht wird. Durch eine Betätigung des Bremspedals 21 in dem ersten Betätigungsbereich wird somit die hydrostatische Verzögerung des Flurförderzeugs 1 durch entsprechende Ansteuerung des hydrostatischen Fahrantriebs 2 ausgehend von der Minimalverzögerung bis zu einem Maximalwert am Ende des ersten Betätigungsbereichs des Bremspedals 21 erhöht.

Am Ende des ersten Betätigungsbereichs des Bremspedals 21, wobei das Betätigungselement 35 mit dem Betätigungshebel 25 der Hilfsbremsanlage 15 in Kontakt gelangt, wird an dem Bremspedal 21 der von der Federeinrichtung 31 erzeugte Druckpunkt spürbar, der überwunden werden muss, um das Bremspedal 21 weiter in den zweiten Betätigungsbereich zu betätigen, in dem über den Betätigungshebel 25 die Hilfsbremsanlage 15 in Richtung der Bremsstellung betätigt wird.

Bei der erfindungsgemäßen Bremspedaleinrichtung 20 ist somit der Pedalweg am Bremspedal 21 in den ersten Betätigungsbereich, in dem die hydrostatische Verzögerung des Flurförderzeugs 1 durch den hydrostatischen Fahrantrieb 2 gesteigert und erhöht wird, und in den anschließenden zweiten Betätigungsbereich aufgeteilt, in dem die Hilfsbremsanlage 15 aktiviert wird.

In dem ersten Betätigungsbereich des Bremspedals 21 und somit der Bremspedaleinrichtung 20 ist die hydrostatische Verzögerung durch den hydrostatischen Fahrantrieb 2 verstellbar und die Hilfsbremsanlage 15 ist nicht betätigt. In dem sich an den ersten Betätigungsbereich anschließenden zweiten Betätigungsbereich des Bremspedals 21 und somit der Bremspedaleinrichtung 20 ist die Hilfsbremsanlage 15 in Richtung einer Bremsstellung betätigbar.

Mit der erfindungsgemäßen Bremspedaleinrichtung 20 kann somit die hydrostatische Verzögerung des Flurförderzeugs durch den hydrostatischen Fahrantrieb 2 angepasst werden und verändert werden. Die hydrostatische Verzögerung, die sich bei einer Betätigung der den hydrostatischen Fahrantrieb 2 steuernden Fahrpedaleinrichtung 11 in Richtung der Neutralstellung einstellt, kann dadurch auf eine Minimalverzögerung eingestellt werden, so dass bei der Zurücknahme der Fahrpedaleinrichtung 11 in die Neutralstellung ein sanftes Abbremsen des Flurförderzeugs 1 durch den hydrostatischen Fahrantrieb erzielt wird. Für bestimmte Einsatzfälle des Flurförderzeugs 1, beispielsweise in Gießereien und beim Transport flüssiger Lasten bzw. beim Transport empfindlicher Lasten, kann somit ein sanftes Abbremsen des Flurförderzeugs 1 durch den hydrostatischen Fahrantrieb 2 bei der Zurücknahme der Fahrpedaleinrichtung 11 in die Neutralstellung erzielt werden. Durch eine zusätzliche Betätigung des Bremspedals 21 in dem ersten Betätigungsbereich kann die hydrostatische Verzögerung, mit der das Flurförderzeug 1 von dem hydrostatischen Fahrantrieb 2 abgebremst wird, angehoben und verstärkt werden, um eine stärkere Abbremsung des Flurförderzeugs 1 zu erzielen und gesetzliche Anforderungen an die Bremsverzögerung und den Bremsweg einzuhalten.

## Patentansprüche

1. Flurförderzeug (1) mit einem hydrostatischen Fahrantrieb (2), der mittels einer Fahrpedaleinrichtung (11) steuerbar ist, wobei durch Beaufschlagen, insbesondere einer Zurücknahme, der Fahrpedaleinrichtung (11) in Richtung einer Neutralstellung eine hydrostatische Abbremsung des Flurförderzeugs (1) durch den hydrostatischen Fahrantrieb (2) erfolgt, und mit einer Hilfsbremsanlage (15), die mittels einer Bremspedaleinrichtung (20) steuerbar ist, wobei durch Betätigen der Bremspedaleinrichtung (20) die hydrostatische Verzögerung des Flurförderzeugs (1) durch den hydrostatischen Fahrantrieb (2) verstellbar ist und die Hilfsbremsanlage (15) in eine Bremsstellung betätigbar ist, wobei die Bremspedaleinrichtung (20) einen ersten Betätigungsbereich aufweist, in dem die hydrostatische Verzögerung durch den hydrostatischen Fahrantrieb (2) verstellbar ist und die Hilfsbremsanlage (15) nicht betätigt ist, und einen sich an den ersten Betätigungsbereich anschließenden zweiten Betätigungsbereich aufweist, in dem die Hilfsbremsanlage (15) in Richtung einer Bremsstellung betätigbar ist, wobei die Bremspedaleinrichtung (20) ein Bremspedal (21) aufweist, das um eine Schwenkachse (22) schwenkbar angeordnet ist, und einen Betätigungshebel (25) aufweist, der um eine weitere Schwenkachse (26) schwenkbar angeordnet ist und die Hilfsbremsanlage (15) betätigt, wobei das Bremspedal (21) in dem ersten Betätigungsbereich den Betätigungshebel (25) nicht betätigt und das Bremspedal (21) in dem zweiten Betätigungsbereich den Betätigungshebel (25) betätigt, **dadurch gekennzeichnet, dass** eine Sensoreinrichtung (23) vorgesehen ist, die die Schwenkbewegung des Bremspedals (21) um die Schwenkachse (22) erfasst und die mit einer den hydrostatischen Fahrantrieb (2) steuernden elektronischen Steuereinrichtung (10) in Verbindung steht, wobei die den hydrostatischen Fahrantrieb (2) steuernde elektronische Steuereinrichtung (10) derart ausgebildet ist, dass bei einer Betätigung der den hydrostatischen Fahrantrieb (2) steuernden Fahrpedaleinrichtung (11) in Richtung einer Neutralstellung der hydroststatische Fahrantrieb (2) derart angesteuert wird, dass das Flurförderzeug (1) gemäß einer Minimalverzögerung abbremst, und bei einer Betätigung des Bremspedals (21) im ersten Betätigungsbereich die Verzögerung des Flurförderzeugs (1) durch den hydrostatischen Fahrantrieb (2) ausgehend von der Minimalverzögerung in Abhängigkeit des Signals der Sensoreinrichtung (23) erhöht wird.

2. Flurförderzeug nach Anspruch 1, **dadurch gekennzeichnet, dass** das Bremspedal (21) in dem ersten Betätigungsbereich keinen mechanischen Kontakt zu dem in einer Neutralstellung befindlichen Betätigungshebel (25) aufweist und am Ende des ersten Betätigungsbereichs mit dem in der Neutralstellung befindlichem Betätigungshebel (25) in mechanischen Kontakt gelangt.

3. Flurförderzeug nach Anspruch 1 oder 2, **dadurch gekennzeichnet, dass** das Bremspedal (21) mittels einer Federeinrichtung (30) in eine Neutralstellung beaufschlagt ist.

4. Flurförderzeug nach einem der Ansprüche 1 bis 3, **dadurch gekennzeichnet, dass** der Betätigungshebel (25) mittels einer Federeinrichtung (31) in eine Neutralstellung beaufschlagt ist.

5. Flurförderzeug nach einem der Ansprüche 1 bis 4, **dadurch gekennzeichnet, dass** zwischen dem Bremspedal (21) und dem Betätigungshebel (25) eine Federeinrichtung (32) angeordnet ist.

6. Flurförderzeug nach einem der Ansprüche 1 bis 5, **dadurch gekennzeichnet, dass** an dem Bremspedal (21) ein Betätigungselement (35) angeordnet ist, mittels dem in dem zweiten Betätigungsbereich der Betätigungshebel (25) betätigbar ist.

7. Flurförderzeug nach Anspruch 6, **dadurch gekennzeichnet, dass** das Betätigungselement (35) als an dem Bremspedal (21) drehbar angeordnete Rolle (36) ausgebildet ist.

8. Flurförderzeug nach einem der Ansprüche 1 bis 7, **dadurch gekennzeichnet, dass** die elektronische Steuereinrichtung (10) derart ausgebildet ist, dass mit zunehmender Betätigung des Bremspedals (21) im ersten Betätigungsbereich die Verzögerung des Flurförderzeugs (1) durch den hydrostatischen Fahrantrieb (2) erhöht wird.

9. Flurförderzeug nach einem der Ansprüche 1 bis 8, **dadurch gekennzeichnet, dass** die Minimalverzögerung einstellbar ist.

10. Flurförderzeug nach einem der Ansprüche 1 bis 9, **dadurch gekennzeichnet, dass** der Betätigungshebel (25) die Hilfsbremsanlage (15) mechanisch oder hydraulisch oder pneumatisch oder elektrisch betätigt.

## Claims

1. Industrial truck (1) with a hydrostatic traction drive (2) which is controllable by means of an accelerator pedal device (1), wherein, by applying, in particular withdrawing, the accelerator pedal device (11) in the direction of a neutral position, a hydrostatic braking of the industrial truck (1) takes place by means of the hydrostatic traction drive (2), and with an auxiliary braking system (15) which is controllable by means of a brake pedal device (20), wherein, by actuation of the brake pedal device (20), the hydrostatic deceleration of the industrial truck (1) by means of the hydraulic traction drive (2) is adjustable and the auxiliary braking system (15) is actuable into a braking position, wherein the brake pedal device (20) has a first actuation region, in which the hydrostatic deceleration by means of the hydrostatic traction drive (2) is adjustable and the auxiliary braking system (15) is not actuated, and has a second actuation region which adjoins the first actuation region and in which the auxiliary braking system (15) is actuable in the direction of a braking position, wherein the brake pedal device (20) has a brake pedal (21), which is arranged pivotably about a pivot axis (22), and has an actuation lever (25) which is arranged pivotably about a further pivot axis (26) and actuates the auxiliary braking system (15), wherein the brake pedal (21) in the first actuation region does not actuate the actuation lever (25) and the brake pedal (21) in the second actuation region actuates the actuation lever (25), **characterized in that** a sensor device (23) is provided which detects the pivoting movement of the brake pedal (21) about the pivot axis (22) and which is connected to an electronic control device (10) controlling the hydrostatic traction drive (2), wherein the electronic control device (10) controlling the hydrostatic traction drive (2) is configured in such a manner that, when the accelerator pedal device (11) which controls the hydrostatic traction drive (2) is actuated in the direction of a neutral position, the hydrostatic traction drive (2) is activated in such a manner that the industrial truck (1) brakes in accordance with a minimal deceleration, and, when the brake pedal (21) is actuated in the first actuation region, the deceleration of the industrial truck (1) is increased starting from the minimum deceleration by the hydrostatic traction drive (2) depending on the signal of the sensor device (23).

2. Industrial truck according to Claim 1, **characterized in that** the brake pedal (21) in the first actuation region does not have any mechanical contact with the actuation lever (25) which is in a neutral position, and, at the end of the first actuation region, enters into mechanical contact with the actuation lever (25), which is in the neutral position.

3. Industrial truck according to Claim 1 or 2, **characterized in that** the brake pedal (21) is applied into a neutral position by means of a spring device (30).

4. Industrial truck according to one of Claims 1 to 3, **characterized in that** the actuation lever (25) is applied into a neutral position by means of a spring device (31).

5. Industrial truck according to one of Claims 1 to 4, **characterized in that** a spring device (32) is arranged between the brake pedal (21) and the actuation lever (25).

6. Industrial truck according to one of Claims 1 to 5, **characterized in that** an actuation element (35) by means of which the actuation lever (25) is actuable in the second actuation region is arranged on the brake pedal (21).

7. Industrial truck according to Claim 6, **characterized in that** the actuation element (35) is configured as a roller (36) which is arranged rotatably on the brake pedal (21).

8. Industrial truck according to one of Claims 1 to 7, **characterized in that** the electronic control device (10) is configured in such a manner that, with increasing actuation of the brake pedal (21) in the first actuation region, the deceleration of the industrial truck (1) is increased by the hydrostatic traction drive (2).

9. Industrial truck according to one of Claims 1 to 8, **characterized in that** the minimum deceleration is adjustable.

10. Industrial truck according to one of Claims 1 to 9, **characterized in that** the actuation lever (25) actuates the auxiliary braking system (15) mechanically or hydraulically or pneumatically or electrically.

## Revendications

1. Chariot de manutention (1) comportant un entraînement de marche hydrostatique (2) qui peut être commandé au moyen d'un dispositif de pédale d'accélérateur (11), une décélération hydrostatique du chariot de manutention (1) par le biais de l'entraînement de marche hydrostatique (2) ayant lieu par sollicitation, en particulier un recul, du dispositif de pédale d'accélérateur (11) en direction d'une position neutre, et comportant un système de freinage auxiliaire (15) qui peut être commandé au moyen d'un dispositif de pédale de frein (20), le ralentissement hydrostatique du chariot de manutention (1) par le biais de l'entraînement de marche hydrostatique (2) étant réglable par actionnement du dispositif de pédale de frein (20) et le système de freinage auxiliaire (15) pouvant être actionné dans une position de freinage, le dispositif de pédale de frein (20) présentant une première zone d'actionnement dans laquelle le ralentissement hydrostatique par le biais de l'entraînement de marche hydrostatique (2) est réglable et le système de freinage auxiliaire (15) n'est pas actionné, et présentant une deuxième zone d'actionnement adjacente à la première zone d'actionnement, deuxième zone d'actionnement dans laquelle le système de freinage auxiliaire (15) peut être actionné en direction d'une position de freinage, le dispositif de pédale de frein (20) comprenant une pédale de frein (21) qui est disposée de manière à pouvoir pivoter autour d'un axe de pivotement (22), et comprenant un levier d'actionnement (25) qui est disposé de manière à pouvoir pivoter autour d'un autre axe de pivotement (26) et actionne le système de freinage auxiliaire (15), la pédale de frein (21) n'actionnant pas le levier d'actionnement (25) dans la première zone d'actionnement et la pédale de frein (21) actionnant le levier d'actionnement (25) dans la deuxième zone d'actionnement, **caractérisé en ce qu'**un dispositif de détection (23) est prévu, lequel détecte le mouvement de pivotement de la pédale de frein (21) autour de l'axe de pivotement (22) et lequel est en liaison avec un dispositif de commande électronique (10) commandant l'entraînement de marche hydrostatique (2), le dispositif de commande électronique (10) commandant l'entraînement de marche hydrostatique (2) étant réalisé de telle sorte qu'en cas d'actionnement du dispositif de pédale d'accélérateur (11) commandant l'entraînement de marche hydrostatique (2) en direction d'une position neutre, l'entraînement de marche hydrostatique (2) est commandé de telle sorte que le chariot de manutention (1) ralentit suivant un ralentissement minimal, et qu'en cas d'actionnement de la pédale de frein (21) dans la première zone d'actionnement, le ralentissement du chariot de manutention (1) par le biais de l'entraînement de marche hydrostatique (2) est augmenté à partir du ralentissement minimal en fonction du signal du dispositif de détection (23).

2. Chariot de manutention selon la revendication 1, **caractérisé en ce que** la pédale de frein (21) ne présente, dans la première zone d'actionnement, aucun contact mécanique par rapport au levier d'actionnement (25) se trouvant dans une position neutre et, à l'extrémité de la première zone d'actionnement, vient en contact mécanique avec le levier d'actionnement (25) se trouvant dans la position neutre.

3. Chariot de manutention selon la revendication 1 ou 2, **caractérisé en ce que** la pédale de frein (21) est sollicitée dans une position neutre au moyen d'un dispositif ressort (30).

4. Chariot de manutention selon l'une des revendications 1 à 3, **caractérisé en ce que** le levier d'actionnement (25) est sollicité dans une position neutre au moyen d'un dispositif ressort (31).

5. Chariot de manutention selon l'une des revendications 1 à 4, **caractérisé en ce qu'**un dispositif ressort (32) est disposé entre la pédale de frein (21) et le levier d'actionnement (25).

6. Chariot de manutention selon l'une des revendications 1 à 5, **caractérisé en ce qu'**un élément d'actionnement (35) est disposé sur la pédale de frein (21), élément d'actionnement au moyen duquel le levier d'actionnement (25) peut être actionné dans la deuxième zone d'actionnement.

7. Chariot de manutention selon la revendication 6, **caractérisé en ce que** l'élément d'actionnement (35) est réalisé sous forme de rouleau (36) disposé de manière rotative sur la pédale de frein (21).

8. Chariot de manutention selon l'une des revendications 1 à 7, **caractérisé en ce que** le dispositif de commande électronique (10) est réalisé de telle sorte qu'au fur et à mesure que l'actionnement de la pédale de frein (21) augmente dans la première zone d'actionnement, le ralentissement du chariot de manutention (1) par le biais de l'entraînement de marche hydrostatique (2) est augmenté.

9. Chariot de manutention selon l'une des revendications 1 à 8, **caractérisé en ce que** le ralentissement minimal est réglable.

10. Chariot de manutention selon l'une des revendications 1 à 9, **caractérisé en ce que** le levier d'actionnement (25) actionne le système de freinage auxiliaire (15) de manière mécanique ou hydraulique ou pneumatique ou électrique.
